# EUROPEAN PATENT APPLICATION

(11) **EP 4 576 412 A1**
(43) Date of publication of application: **25.06.2025**
(21) Application number: 23913975.1
(22) Date of filing: 04.01.2023
(51) Int. Cl.: H01M 50/593, H01M 50/586

(54) **BATTERY CELL, BATTERY AND ELECTRIC DEVICE**

(71) Applicant: Contemporary Amperex Technology (Hong Kong) Limited, Central (HK)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LUO, Mengkun, Ningde, Fujian 352100 (CN); LI, Quankun, Ningde, Fujian 352100 (CN)
(74) Representative: Behr, Wolfgang
(86) International application number: PCT/CN2023/070422
(87) International publication number: WO 2024/145816

(57) **Abstract**

The present disclosure provides a battery cell, a battery, and an electric device, relating to the technology field of batteries. The battery cell includes a housing, an electrode assembly, a first insulating member, and a support frame. The housing is provided with a first wall, and the electrode assembly is accommodated within the housing. The electrode assembly includes a main portion. Along a thickness direction of the first wall, the first insulating member is provided on a side of the first wall facing the electrode assembly. Along the thickness direction of the first wall, the support frame is arranged between the main portion and the first insulating member, and the support frame is thermally fused to the first insulating member. The battery cell with the structure is capable of fixing the support frame to the first insulating member so as to fasten the support frame within the housing. This can reduce the phenomenon of the support frame shifting or displacing during use, thereby reducing the risk of the support frame damaging the electrode assembly due to shifting or displacement, improving the stability and reliability of the battery cell in use, and thus benefiting the improvement of the safety and service life of the battery cell.

## Description

### TECHNICAL FIELD

The present disclosure relates to the technical field of batteries, and particularly to a battery cell, a battery, and an electric device.

### BACKGROUND ART

In recent years, new energy vehicles have experienced a leapfrog development. In the field of electric vehicles, power batteries serve as the energy source for electric vehicles and play an irreplaceable important role. With the strong promotion of new energy vehicles, the demand for power battery products is also increasing. The battery, as the core component of new energy vehicles, has high requirements in terms of both safety and service life. The battery cell of the battery is typically assembled from the positive electrode sheet, the negative electrode sheet, and the separator through methods such as winding or stacking to form an electrode assembly (bare core). It is then placed into a housing and finally obtained after injecting the electrolyte. However, the existing battery cell often experiences damage to the electrode assembly during use, which can easily cause the battery cell to trigger a short-circuit risk and lead to poor usage stability of the battery cell, thereby making it difficult to improve the safety and service life of the battery cell.

### SUMMARY

The embodiments of the present disclosure provide a battery cell, a battery, and an electric device that can effectively enhance the safety and service life in the use of the battery cell.

In the first aspect, the embodiments of the present disclosure provide a battery cell, including a housing, an electrode assembly, a first insulating member, and a support frame; the housing is provided with a first wall; the electrode assembly is accommodated in the housing, and the electrode assembly includes a main portion; along a thickness direction of the first wall, the first insulating member is provided on a side of the first wall facing the electrode assembly; and along the thickness direction of the first wall, the support frame is arranged between the main portion and the first insulating member, and the support frame is thermally fused to the first insulating member.

In the above technical solution, a first insulating member, configured for insulating and isolating the electrode assembly and the first wall, is provided in the housing; and the support frame is connected to the first insulating member by thermal fusion, so that the support frame can be fixed on the first insulating member to tightly fix the support frame inside the housing. The battery cell with the structure can reduce the phenomenon of the support frame shifting or displacing during use, thereby reducing the risk of the support frame damaging the electrode assembly due to shifting or displacement, improving the stability and reliability of the battery cell in use, and thus benefiting the improvement of the safety and service life of the battery cell. In addition, by using thermal fusion to fix the support frame to the first insulating member, on the one hand, the connection stability between the support frame and the first insulating member can be improved, thus reducing the risk of separation between the support frame and the first insulating member during use; and on the other hand, it facilitates fixing the support frame to the first insulating member, which is conducive to reducing assembly difficulty.

In some embodiments, the support frame is provided with a first connecting portion; the first insulating member is provided with a second connecting portion; the first connecting portion is thermally fused to the second connecting portion; and the light transmittance of the first connecting portion is T₁, and the light transmittance of the second connecting portion is T₂, satisfying a condition: T₁ > T₂.

In the above technical solution, the first connecting portion of the support frame and the second connecting portion of the first insulating member are thermally fused to each other to achieve the fixation of the support frame on the first insulating member. By setting the light transmittance of the first connecting portion to be greater than the light transmittance of the second connecting portion, on the one hand, the first connecting portion and the second connecting portion with different light transmittances can be thermally fused by laser welding, which is conducive to reducing the assembly difficulty between the support frame and the first insulating member. On the other hand, during the assembly of the battery cell, the laser can enter and penetrate the support frame from the side of the support frame facing the main portion and act on the contact surface between the first connecting portion and the second connecting portion, thereby achieving the laser thermal fusion between the first connecting portion and the second connecting portion, which is conducive to reducing the assembly difficulty of laser welding between the support frame and the first insulating member, improving the production efficiency of the battery cell, and facilitating the laser to penetrate the first connecting portion of the support frame and melt the contact surface between the second connecting portion of the first insulating member and the first connecting portion of the support frame. Therefore, this enables the second connecting portion of the first insulating member and the first connecting portion of the support frame to be mutually melted and connected, effectively ensuring the connection quality between the first insulating member and the support frame, and improving the stability and reliability of the connection between the first insulating member and the support frame.

In some embodiments, 40%≤T₁≤99%.

In the above technical solution, by setting the light transmittance of the first connecting portion of the support frame to be between 40% and 99%, the light transmittance effect of the first connecting portion can be effectively ensured, thereby alleviating the phenomenon where the laser cannot effectively penetrate the first connecting portion due to the excessively low light transmittance of the first connecting portion, which would otherwise result in the failure of welding between the first connecting portion and the second connecting portion of the first insulating member. This facilitates the melting of the contact surface between the first connecting portion and the second connecting portion after the laser penetrates the first connecting portion, thereby enabling the mutual melting and connection of the first insulating member and the support frame, and ensuring the connection quality between the first insulating member and the support frame.

In some embodiments, 60%≤Ti≤99%.

In the above technical solution, by further setting the light transmittance of the first connecting portion of the support frame to be between 60% and 99%, the light transmittance effect of the first connecting portion can be further improved, thereby further enhancing the quality of laser thermal fusion between the first connecting portion and the second connecting portion, and further improving the welding strength between the first connecting portion and the second connecting portion.

In some embodiments, 0%≤T₂≤10%.

In the above technical solution, by setting the light transmittance of the first insulating member to be between 0% and 10%, the light transmittance effect of the second connecting portion of the first insulating member can be reduced, thereby effectively alleviating the phenomenon of the failure to melt the contact surface between the second connection portion and the first connection portion after the laser passes through the second connection portion, which is caused by the high transmittance of the second connection portion. Therefore, the laser can be concentrated on the contact surface between the first insulating member and the support frame, which is conducive to ensuring the connection quality between the first insulating member and the support frame and reducing the risk of damage to other components of the battery cell caused by the laser passing through the first insulating member; and this ensures the production quality of the battery cell.

In some embodiments, along the thickness direction of the first wall, the first connecting portion and the second connecting portion are arranged in a stacked manner and thermally fused.

In the above technical solution, by arranging the first connecting portion and the second connecting portion in a stacked manner and thermally fusing them, a fixed connection between the support frame and the first insulating member can be achieved. On the one hand, the battery cell with the structure is easy to assemble, which is conducive to reducing the assembly difficulty between the support frame and the first insulating member. On the other hand, after stacking the first connecting portion and the second connecting portion and then thermally fusing them, the assembly quality between the support frame and the first insulating member is improved, thus enhancing the stability and reliability of the connection between the support frame and the first insulating member.

In some embodiments, along a thickness direction of the first wall, a thickness of the first connecting portion is D₁, satisfying a condition: 0.5mm≤D₁≤2.5mm.

In the above technical solution, by setting the thickness of the first connecting portion between 0.5mm and 2.5mm, on the one hand, it is possible to alleviate the phenomenon of the insufficient structural strength of the first connecting portion due to the thickness of the first connecting portion being too small, thus reducing the occurrence of deformation in the first connecting portion during the thermal fusion process with the second connecting portion; this effectively lowers the risk of gaps or connection failure between the first connecting portion and the second connecting portion, and is conducive to improving the connection quality and the connection stability between the first connecting portion and the second connecting portion. On the other hand, it can alleviate the phenomenon of material waste or excessive assembly difficulty due to the too-large thickness of the first connecting portion, which is conducive to reducing the manufacturing cost of the battery cell.

In some embodiments, along a thickness direction of the first wall, a thickness of the second connecting portion is D₂, satisfying a condition: 0.5mm≤D₂≤2.5mm.

In the above technical solution, by setting the thickness of the second connecting portion between 0.5mm and 2.5mm, on the one hand, it is possible to alleviate the phenomenon of the insufficient structural strength of the second connecting portion due to the thickness of the second connecting portion being too small, thus reducing the occurrence of deformation in the second connecting portion during the thermal fusion process with the first connecting portion; this effectively lowers the risk of gaps or connection failure between the second connecting portion and the first connecting portion, and is conducive to improving the connection quality and the connection stability between the second connecting portion and the first connecting portion. On the other hand, it can alleviate the phenomenon of material waste or excessive assembly difficulty due to the too-large thickness of the second connecting portion, which is conducive to reducing the manufacturing cost of the battery cell.

In some embodiments, the support frame further includes a main body portion; along the first direction, the first connecting portion protrudes from one end of the main body portion; and the first direction is perpendicular to the thickness direction of the first wall.

In the above technical solution, the support frame is also provided with a main body portion, and the first connecting portion is the portion of the support frame that protrudes from one end of the main body portion in the first direction. In other words, the first connecting portion of the support frame configured to connect with the first insulating member is located at one end of the support frame in the first direction. The support frame with the structure can effectively avoid other components of the battery cell, thus facilitating the assembly of the support frame and the first insulating member, and reducing assembly difficulty.

In some embodiments, along the first direction, both ends of the main body portion are provided with the first connecting portion, and the first connecting portion is arranged to correspond one-to-one with the second connecting portion.

In the above technical solution, both ends of the main body portion of the support frame in the first direction are provided with the first connecting portion, and the first insulating member is correspondingly provided with two second connecting portions, so that both ends of the support frame in the first direction can be fixed to the first insulating member. This is conducive to further improving the stability and reliability of the connection between the support frame and the first insulating member, and to reducing the risk of detachment between the support frame and the first insulating member during use.

In some embodiments, the first insulating member includes an insulating body and a protrusion; along the thickness direction of the first wall, the insulating body is provided on one side of the first wall facing the electrode assembly; the protrusion is provided on one side of the insulating body facing the electrode assembly in a protruding manner; and the protrusion is provided with the second connecting portion.

In the above technical solution, the first insulating member is provided with an insulating body and a protrusion provided in a protruding manner on the insulating body, and the protrusion is provided with the second connecting portion. That is, the first connecting portion of the support frame is connected to the protrusion of the first insulating member. The first insulating member with the structure facilitates the assembly of the first insulating member and the support frame, which is conducive to reducing the connection difficulty between the first connecting portion and the second connecting portion.

In some embodiments, along the thickness direction of the first wall, the protrusion is provided with a first surface facing the electrode assembly; the first surface is provided with a first groove; the first connecting portion abuts the bottom surface of the first groove; the insulating body is provided with a second surface abutting the first wall; the second surface is provided with a second groove; and a portion of the protrusion located between the bottom surface of the first groove and the bottom surface of the second groove forms the second connecting portion.

In the above technical solution, by providing the first groove on the first surface of the protrusion and providing the second groove on the second surface of the insulating body, the portion of the protrusion between the bottom surface of the first groove and the bottom surface of the second groove forms the second connecting portion configured for thermal fusion connection with the first connecting portion. The first insulating member with the structure can thin the thickness of the second connecting portion while ensuring the structural strength of the protrusion, thus making it easier to control the thickness of the second connecting portion. This is conducive to improving the connection quality between the second connecting portion and the first connecting portion. In addition, after the first connecting portion abuts the bottom surface of the first groove and is thermally fused with the second connecting portion, the first groove can accommodate at least a portion of the first connecting portion, which is beneficial for providing a certain protective effect to the first connecting portion to reduce the occurrence of the wear of the first connecting portion during the assembly or use process.

In some embodiments, the first insulating member includes an insulating body and two protrusions; along the thickness direction of the first wall, the insulating body is provided on one side of the first wall facing the electrode assembly; the two protrusions are provided in a protruding manner on one side of the insulating body facing the electrode assembly; along the first direction, the two protrusions are arranged at intervals, and a holding space is formed between the two protrusions; the holding space is configured to accommodate at least a portion of the support frame; and the first direction is perpendicular to the thickness direction of the first wall.

In the above technical solution, by accommodating at least a portion of the support frame in the holding space formed between the two protrusions of the first insulating member, it can provide a certain limiting and positioning effect on the support frame. On one hand, it facilitates the assembly of the support frame and can provide a certain protective effect for the support frame. On the other hand, it can further reduce the occurrence of movement of the support frame during the assembly or use process of the battery cell, thereby reducing the risk of the support frame damaging the electrode assembly due to the movement, which is conducive to improving the safety and service life of the battery cell.

In some embodiments, along the thickness direction of the first wall, the protrusion is provided with a first surface facing the main portion, and the support frame does not extend beyond the first surface.

In the above technical solution, arranging the support frame in the thickness direction of the first wall not to extend beyond the first surface of the protrusion means that the entire support frame is accommodated within the holding space, which, on one hand, can enhance the limiting effect of the first insulating member on the support frame and is conducive to improving the protective effect of the first insulating member on the support frame. On the other hand, it can save the space occupied by the first insulating member and the support frame, which is conducive to optimizing the internal space of the battery cell and improving the utilization rate of the internal space of the battery cell.

In some embodiments, the support frame includes a main body portion and a first connecting portion; the main body portion is accommodated in the holding space; along the first direction, the first connecting portion protrudes from at least one end of the main body portion; along the thickness direction of the first wall, the protrusion is provided with a first surface facing the main portion; the first surface is provided with a first groove; along the first direction, the first groove penetrates through the protrusion and communicates with the holding space; the first connecting portion extends into the first groove; and the first connecting portion is thermally fused to the bottom surface of the first groove.

In the above technical solution, by providing a first groove on the first surface of the protrusion facing the main portion, and the first groove penetrates through the protrusion along the first direction and communicates with the holding space, the protrusion forms a stepped structure. By accommodating the main body portion of the support frame in the holding space and arranging the first connecting portion of the support frame to extend into the first groove, with the first connecting portion abutting and thermally fused to the bottom surface of the first groove, the protrusion can provide a certain limiting and positioning effect on the support frame in the thickness direction of the first wall. This improves the assembly quality between the support frame and the first insulating member and facilitates the thermal fusion connection between the support frame and the first insulating member, which is conducive to reducing the assembly difficulty.

In some embodiments, the first connecting portion and the groove side surface of the first groove are arranged at intervals, and the distance between the first connecting portion and the groove side surface of the first groove is L, satisfying a condition: 0.8mm ≤ L ≤ 2mm.

In the above technical solution, by setting the distance between the first connecting portion of the support frame and the groove side surface of the first groove between 0.8mm and 2mm, on one hand, it can alleviate the phenomenon where the distance between the first connecting portion accommodated in the first groove and the groove side surface of the first groove is too small, which could cause excessive assembly difficulty and high assembly precision requirements when assembling the support frame into the holding space and the first groove. Thereby, it is conducive to reducing the difficulty of assembly between the support frame and the first insulating member, thus enhancing assembly efficiency. On the other hand, it can alleviate the phenomenon where the distance between the first connecting portion of the support frame and the groove side surface of the first groove is too large, which could lead to poor limiting and positioning effects of the first groove on the support frame.

In some embodiments, the battery cell further includes an electrode terminal; the electrode terminal is provided on the first wall; the electrode assembly further includes a tab, and along the thickness direction of the first wall, the tab protrudes from one end of the main portion facing the first wall; the tab is bent around the support frame; and the tab is connected to the electrode terminal.

In the above technical solution, the electrode terminal is provided on the first wall of the housing, and the tab is provided at one end of the main portion facing the first wall. By arranging the tab to be bent around the support frame and then connected to the electrode terminal, the electrical connection between the electrode assembly and the electrode terminal is realized, thereby enabling the input or output of the electrical energy of the battery cell. The battery cell with the structure positions the part, where the tab is connected to the electrode terminal, on the side of the support frame away from the main portion, which can effectively alleviate the phenomenon of the tab being inserted backward into the main portion of the electrode assembly during assembly or use, thereby reducing the short-circuit risk of the battery cell and improving the safety of the battery cell. In addition, since the support frame is thermally fused to the first insulating member, it can effectively reduce the occurrence of movement or displacement of the support frame during the use of the battery cell, thereby reducing the risk of the support frame damaging the shape of the tab or causing damage to the tab due to movement. This alleviates the occurrence of short circuits between the tab and other components or the failure of the connection between the electrode assembly and the electrode terminal, which is conducive to improving the safety and service life of the battery cell.

In some embodiments, the battery cell further includes a current collector member; along the thickness direction of the first wall, the current collector member is provided between the first insulating member and the support frame; and the current collector member connects the electrode terminal and the tab.

In the above technical solution, the battery cell is further provided with a current collector member. The current collector member is connected to the electrode terminal and the current collector member is provided between the first insulating member and the support frame, so as to connect the current collector member to the electrode terminal and the tab of the electrode assembly. This realizes the electrical connection between the electrode assembly and the electrode terminal, to output or input the electrical energy of the battery cell. The structure facilitates the connection of the tab to the current collector member, which is conducive to reducing the assembly difficulty between the tab and the electrode terminal.

According to some embodiments of the present disclosure, the housing includes a shell and end cap, the interior of the shell forms an accommodating cavity with an opening, and the electrode assembly is accommodated in the accommodating cavity. The end cap closes the opening, wherein the end cap is the first wall.

In the above technical solution, the first wall of the housing is an end cap of the housing configured for closing the opening of the shell. The battery cell with the structure facilitates the assembly of the support frame and the first insulating member, and is beneficial for reducing the assembly difficulty of the first insulating member into the housing and between the support frame and the first insulating member, thereby contributing to improving the production efficiency of the battery cell.

In some embodiments, the housing includes a shell and an end cap; the shell includes a side wall and the first wall which are integrally molded, with the side wall arranged around the first wall. Along the thickness direction of the first wall, one end of the side wall is connected to the first wall, and the other end encloses to form an opening. The side wall and the first wall together define an accommodating cavity configured for accommodating the electrode assembly; and the end cap closes the opening.

In the above technical solution, the first wall is a wall of the shell that is arranged opposite to the end cap along the thickness direction of the first wall. The battery cell with the structure can enable components such as the first insulating member and the support frame to be positioned away from the end cap and ensure that there is no direct connection relationship between the first wall and the end cap. Thus, it prevents the phenomenon where the forces, generated when the components like the first insulating member and the support frame pull and twist the first wall, are applied the end cap, thereby reducing the risk of connection failure between the end cap and the shell. This is further conducive to reducing the risk of leakage during the use of the battery cell.

In a second aspect, the embodiments of the present disclosure also provide a battery, including the above-mentioned battery cell.

In the third aspect, the embodiments of the present disclosure further provide an electric device comprising the battery as described above.

### BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of the structure of a battery provided in some embodiments of the present disclosure;
FIG. 3 is a schematic diagram of a structure of a battery cell provided in some embodiments of the present disclosure;
FIG. 4 is an exploded view of a structure of a battery cell provided in some embodiments of the present disclosure;
FIG. 5 is a partial sectional view of a battery cell provided by some embodiments of the present disclosure;
FIG. 6 is a partially enlarged view of a battery cell at location A shown in FIG. 5;
FIG. 7 is a schematic diagram of a structure of a support frame of a battery cell provided in some embodiments of the present disclosure;
FIG. 8 is a schematic diagram of a structure of a first insulating member of a battery cell provided in some embodiments of the present disclosure;
FIG. 9 is a schematic view of a connection between a support frame and a first insulating member provided by some embodiments of the present disclosure; and
FIG. 10 is a bottom view of a support frame connected to a first insulating member provided by some embodiments of the present disclosure.

Reference numerals: 1000 - vehicle; 100 - battery; 10 - box; 11 - first box body; 12 - second box body; 20 - battery cell; 21 - housing; 211 - first wall; 2111 - lead-out hole; 212 - shell; 2121 - opening; 213 - end cap; 22 - electrode assembly; 221 - main portion; 222 - tab; 23 - first insulating member; 231 - second connecting portion; 232 - insulating body; 2321 - second surface; 2322 - second groove; 233 - protrusion; 2331 - first surface; 2332 - first groove; 234 - holding space; 24 - support frame; 241 - first connecting portion; 242 - main body portion; 25 - electrode terminal; 251 - riveting block; 26 - current collector member; 27 - second insulating member; 28 - sealing component; 29 - pressure relief mechanism; 200 - controller; 300 - motor; x - thickness direction of a first wall; y - first direction.

### DETAILED DESCRIPTION OF EMBODIMENTS

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms, "comprise", "provide" and their variations, and any other variations, are intended to cover non-exclusive inclusion in the summary, the claims, and the above drawings of the present disclosure. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiments can be included in at least one embodiment of the present disclosure. The use of the phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "provide", "interconnect", "connect", and "attach" should be understood in a broad sense. For example, it can be a fixed connection, a detachable connection, or an integral connection; and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, and the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-ion batteries, and magnesium-ion batteries. The embodiments of the present disclosure are not limited to any specific type of battery. The battery cell can have various shapes such as cylindrical, flat, rectangular, or other shapes. The embodiments of the present disclosure are not limited in respect thereof either. Battery cells are generally categorized into three types according to the encapsulation method: cylindrical battery cells, prismatic battery cells, and pouch battery cells. The embodiments of the present disclosure are not limited in respect thereof either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally comprises a box for encapsulating one or more battery cells or multiple battery modules. The box helps to prevent liquids or other foreign substances from affecting the charging or discharging of the battery cells.

The battery cell comprises a housing, an electrode assembly, and an electrolyte, and the housing is configured to accommodate the electrode assembly and the electrolyte. The electrode assembly is composed of a positive electrode sheet, a negative electrode sheet, and a separator. The battery cells work primarily on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector. The portion of the positive electrode current collector not coated with the positive electrode active material layer serves as the positive electrode tab to realize the input or output of the electrical energy of the positive electrode sheet by the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide. The negative electrode sheet comprises a negative electrode current collector and a negative electrode active material layer. The negative electrode active material layer is coated on a surface of the negative electrode current collector. The portion of the negative electrode current collector not coated with the negative electrode active material layer serves as the negative electrode tab to realize the input or output of the electrical energy of the negative electrode sheet by the negative electrode tab. The material of the negative electrode current collector can be copper, and the negative active material can be carbon or silicon, and so on. To ensure that there is no fuse blow during high current flow, multiple positive electrode tabs are provided and stacked together, and multiple negative electrode tabs are provided and stacked together.

The material of the separator can be PP (polypropylene), PE (polyethylene), and so on. Furthermore, the electrode assembly can be a wound structure or a stacked structure. The embodiments of the present disclosure are not limited herein.

Batteries have prominent advantages such as high energy density, low environmental pollution, high power density, long service life, broad applicability, and low self-discharge coefficient. They are an important component of the current development of new energy sources. The battery cell of the battery is typically assembled from the positive electrode sheet, the negative electrode sheet, and the separator through methods such as winding or stacking to form an electrode assembly (bare core). It is then placed into a housing and finally obtained after injecting the electrolyte. However, with the continuous development of battery technology, higher demands have been placed on the safety performance and service life of batteries.

For a general battery cell, the housing of the battery cell usually includes a shell and an end cap, with the end cap covering the opening of the shell. To facilitate the assembly of the battery cell, the electrode post is typically assembled onto the end cap of the battery cell, so that when the end cap is covered on the shell, the electrode post can be welded to the tab of the electrode assembly through the current collector member arranged inside the shell; and this achieves an electrical connection between the electrode post and the electrode assembly. Therefore, the electrode post serves as the output terminal of the battery cell to enable the input or output of electrical energy of the battery cell; and finally, the end cap is then attached to the shell.

The inventors have discovered that the current collector member is typically configured to connect the electrode post and the tab of the electrode assembly. The current collector member is arranged between the electrode post and the electrode assembly, thus allowing the electrode post and the tab of the electrode assembly to be connected through the current collector member. However, during the assembly or usage process of the battery cell with the structure, the current collector member will exert some compression on the tab, which can easily cause the tab to be pressed and inserted backward into the electrode assembly, thus leading to a high risk of short circuits in the battery cell and leading to poor operational stability of the battery cell. To address the issue of the tab being inserted back, the prior art typically involves arranging a support frame between the electrode assembly and the current collector member, such that the current collector member is positioned on the side of the support frame that faces away from the electrode assembly. This allows the tab to be bent around the support frame and then to be connected to the current collector member, thus effectively alleviating the phenomenon where the tab is inserted backward into the interior of the electrode assembly. However, in a battery cell with the structure, the support frame will shift or move during the use of the battery cell, which can easily damage the shape of the tab and even damage the electrode assembly. This can further result in short circuits between the electrode assembly and other components or cause the connection between the electrode assembly and the electrode post to fail, which is not conducive to improving the safety and service life of the battery cells.

In view of the above considerations, to solve the problems of low safety and short lifespan in battery cells, the inventors have conducted in-depth research and designed a battery cell. The battery cell includes a housing, an electrode assembly, a first insulating member, and a support frame. The housing is provided with a first wall, and the electrode assembly is accommodated within the housing. The electrode assembly includes a main portion. Along a thickness direction of the first wall, the first insulating member is provided on a side of the first wall facing the electrode assembly. The first insulating member is configured for insulating and isolating the electrode assembly and the first wall. Along the thickness direction of the first wall, the support frame is arranged between the main portion and the first insulating member, and the support frame is thermally fused to the first insulating member.

In a battery cell with the structure, a first insulating member, configured for insulating and isolating the electrode assembly and the first wall, is provided in the housing; and the support frame is connected to the first insulating member by thermal fusion so that the support frame can be fixed on the first insulating member to tightly fix the support frame inside the housing. The battery cell with the structure can reduce the phenomenon of the support frame shifting or displacing during use, thereby reducing the risk of the support frame damaging the electrode assembly due to shifting or displacement, improving the stability and reliability of the battery cell in use, and thus benefiting the improvement of the safety and service life of the battery cell. In addition, by using thermal fusion to fix the support frame to the first insulating member, on the one hand, the connection stability between the support frame and the first insulating member can be improved, thus reducing the risk of separation between the support frame and the first insulating member during use; and on the other hand, it facilitates fixing the support frame to the first insulating member, which is conducive to reducing assembly difficulty.

The battery cell disclosed in the embodiments of the present disclosure can be used in various electric devices, including but not limited to vehicles, ships, or aircraft. A power system of the electrical device can be constructed using the battery cell, the battery, and other components disclosed in the present disclosure. This is advantageous for solving the problem of the electrode assembly being easily damaged during use, thereby improving the safety and lifespan of the battery cell.

The embodiments of the present disclosure provide an electric device that uses batteries as a power source. The electric device can comprise, but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electric device is a vehicle 1000 as an example.

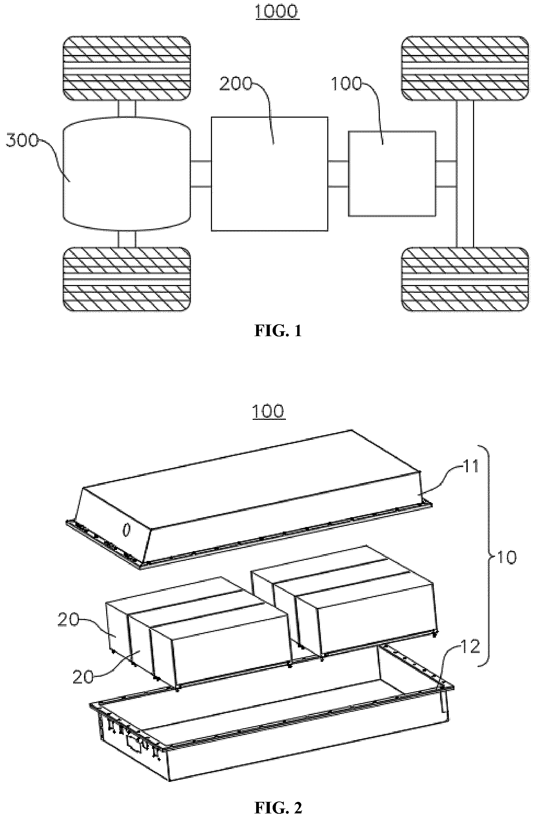

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. The vehicle 1000 is therein provided with a battery 100, and the battery 100 can be provided at the bottom of the vehicle 1000, at the head of the vehicle 1000, or at the rear of the vehicle 1000. The battery 100 is configured to provide power for the vehicle 1000. For instance, the battery 100 can serve as an operational power source or a power source for the use of the vehicle 1000. Additionally, the vehicle 1000 also comprises a controller 200 and a motor 300. The controller 200 is configured to manage the supply of power from the battery 100 to the motor 300, for example, for working power requirements for starting, navigating, and driving the vehicle 1000.

In some embodiments of the present disclosure, the battery 100 serves not only as the operational power source or the power source for use of the vehicle 1000 but also as the driving power source for the vehicle 1000. It can replace or partially substitute for conventional fuels like gasoline or natural gas to provide driving propulsion for the vehicle 1000.

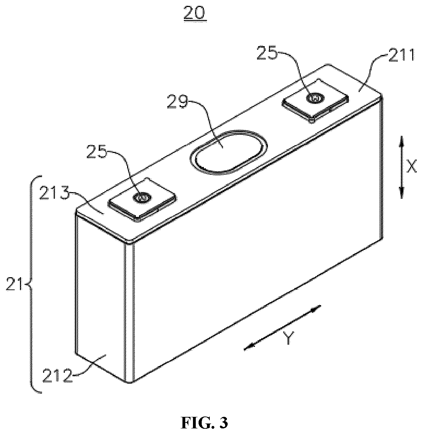

Referring to FIGS. 2 and 3, FIG. 2 is an exploded view of a structure of a battery 100 provided in some embodiments of the present disclosure, and FIG. 3 is a structural schematic diagram of a battery cell 20 provided in some embodiments of the present disclosure. The battery 100 comprises a box 10 and a battery cell 20, wherein the box 20 is configured to contain the battery cell 10.

The box 10 is configured to provide an assembly space for the battery cell 20, and the box 10 can be of various structures. In some embodiments, the box 10 can comprise a first box body 11 and a second box body 12, wherein the first box bod 11 and the second box body 12 are fitted together. The first box body 11 and the second box body 12 collectively define an assembly space configured for accommodating the battery cell 20. The second box body 12 can be a hollow structure open at one end, and the first box body 11 can be a plate-like structure. The first box body 11 is capped over an open side of the second box body 12 so that the first box body 11 and the second box body 12 together define an assembly space. Or, both the first box body 11 and the second box body 12 can be hollow structures open at one end, and an open side of the first box body 11 is capped over an open side of the second box body 12. Of course, the box 10 formed by the first box body 11 and the second box body 12 can be of a variety of shapes, such as cylindrical or rectangular. Exemplarily, in FIG. 2, the box 10 is rectangular in shape.

In the battery 100, one or multiple battery cells 20 can be provided inside the box 10. When multiple battery cells 20 are provided in the box 10, the multiple battery cells 20 can be connected in series, parallel, or hybrid. A hybrid connection refers to having both series and parallel connections among multiple battery cells 20. The multiple battery cells 20 can be directly connected in series, parallel, or hybrid. Then, the whole comprising the multiple battery cells 20 is housed in the box 10. Of course, the battery 100 can also be in the form that, the multiple battery cells 20 are first connected in series, parallel, or hybrid to form battery modules, and then the multiple battery modules are connected in series, parallel, or hybrid to be formed into a whole, which is then accommodated within the box 10. The battery 100 can also comprise other structures. For example, the battery 100 can also comprise a busbar component, which is configured for achieving electrical connections between the multiple battery cells 20.

Each battery cell 20 can be a secondary battery or a primary battery; and it can also be a lithium-sulfur battery, sodium-ion battery, magnesium-ion battery, or other types, but is not limited to these. The battery cell 20 can have various shapes such as cylindrical, flat, rectangular, or other shapes. Exemplarily, in FIG. 3, the battery cell 20 is of a cylindrical structure.

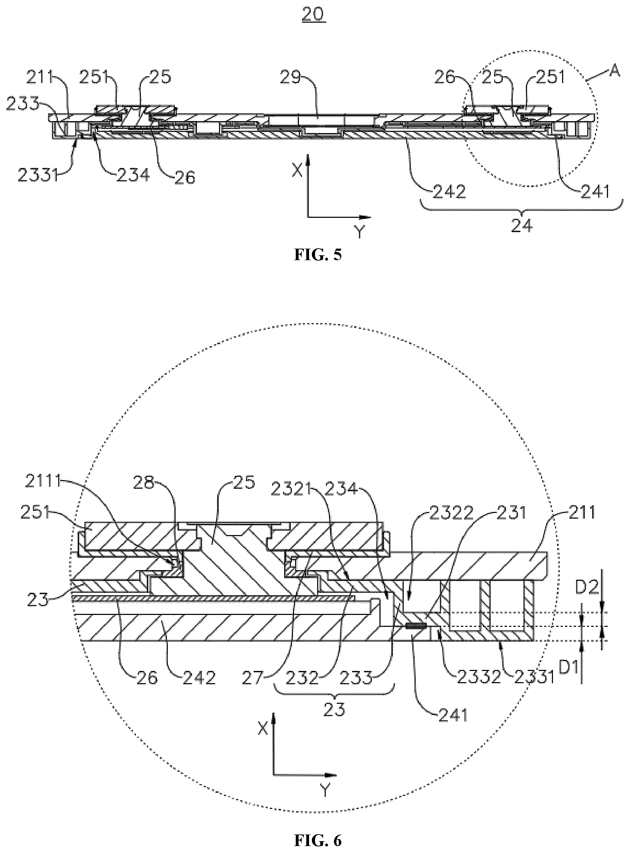

According to some embodiments of the present disclosure, with reference to FIG. 3, and with further reference to FIGS. 4, 5, and 6, FIG. 4 is an exploded view of the structure of the battery cell 20 provided in some embodiments of the present disclosure; FIG. 5 is a partial sectional view of a battery cell 20 provided by some embodiments of the present disclosure; and FIG. 6 is a partial enlarged view of a battery cell 20 at location A shown in FIG. 5. The present disclosure provides a battery cell 20, wherein the battery cell 20 comprises a housing 21, an electrode assembly 22, a first insulating member 23, and a support frame 24. The housing 21 is provided a first wall 211, and the electrode assembly 22 is accommodated within the housing 21. The electrode assembly 22 includes a main portion 221. Along a thickness direction X of the first wall, the first insulating member 23 is provided on a side of the first wall 211 facing the electrode assembly 22. The first insulating member 23 is configured for insulating and isolating the electrode assembly 22 and the first wall 211. Along the thickness direction X of the first wall, the support frame 24 is arranged between the main portion 221 and the first insulating member 23, and the support frame 24 is thermally fused to the first insulating member 23.

The housing 21 can also be configured to contain an electrolyte, such as an electrolytic solution. The housing 21 can be of various structural forms, such as cylinder or cuboid. Similarly, the material of the housing 21 can also be diverse, including copper, iron, aluminum, steel, aluminum alloy, and more.

In some embodiments, the housing 21 can include a shell 212 and an end cap 213. The shell 212 is therein formed with an accommodating cavity. The accommodating cavity is configured to contain the electrode assembly 22. The accommodating cavity is provided with an opening 2121. That is, the shell 212 is a hollow structure with an opening 2121 at one end. The end cap 213 is capped over the opening 2121 of the shell 212 to form a hermetical connection, thus forming a sealed space configured for accommodating the electrode assembly 22 and the electrolyte.

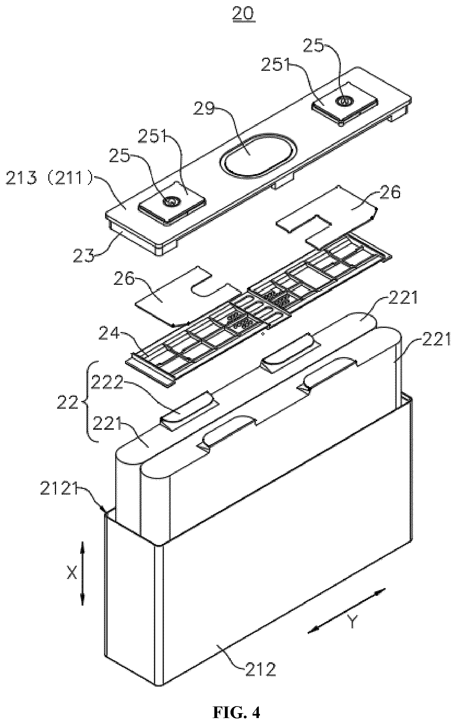

It is noted that the first wall 211 can be an end cap 213 or a wall of the shell 212. Exemplarily, in FIG. 3 and FIG. 4, the first wall 211 is an end cap 213. Of course, the structure of the battery cell 20 is not limited to this. In other embodiments, the first wall 211 can also be a bottom wall of the shell 212 arranged opposite to the end cap 213, and the first wall 211 can also be a side wall of the shell 212 that is adjacent to and abuts the end cap 213.

During the assembly of the battery cell 20, the electrode assembly 22 can first be placed inside the shell 212; and the shell 212 is filled with the electrolyte. Then, the end cap 213 is capped over the opening 2121 of the shell 212, thus achieving an assembly of the battery cell 20.

The shell 212 can have various shapes, such as a cylindrical structure, a rectangular cuboid, or a prismatic structure. The shape of the shell 212 can be determined based on the specific shape of the electrode assembly 22. For example, if the electrode assembly 22 is of a cylindrical structure, the shell 212 of a cylindrical structure can be selected; if the electrode assembly 22 is of a rectangular structure, the shell 212 of a rectangular structure can be selected. Of course, the end cap 213 can also be of various structures. For example, the end cap 213 is of a plate-like structure, or a hollow structure open at one end. Exemplarily, in FIG. 4, the shell 212 is of a cylindrical structure.

Of course, understandably, the housing 21 is not limited to the above structure, and the housing 21 can also be other structures. For example, the housing 21 comprises a shell 212 and two end caps 213. The shell 212 is a hollow structure with openings 2121 on opposite sides. An end cap 213 is correspondingly capped over an opening 2121 of the shell 212 to form a hermetical connection, thereby forming a sealed space configured for accommodating the electrode assembly 22 and the electrolyte. That is, the shell 212 is formed with openings 2121 on opposite sides, and two end caps 213 are capped on each side of the shell 212 to close the corresponding openings 2121.

It is important to note that the electrode assembly 22 is the component within the battery cell 20 where electrochemical reactions occur. The main portion 221 of the electrode assembly 22 can comprise a positive electrode sheet, a negative electrode sheet, and a separator, wherein the structure of the electrode assembly 22 can be various. For example, the main portion 221 of the electrode assembly 22 can be in the form of a wound structure formed by winding a positive electrode sheet, a separator, and a negative electrode sheet. The main portion 221 of the electrode assembly 22 can also be in the form of a stacked structure formed by layering a positive electrode sheet, a separator, and a negative electrode sheet.

The electrode assembly 22 can also include a tab 222, and the tab 222 is connected to the main portion 221. The tab 222 is configured to output the positive or negative electrodes of the electrode assembly 22, thereby enabling the input or output of electrical energy of the battery cell 20. The tab 222 of the electrode assembly 22 is a component formed by the stacked connection of regions on the positive electrode sheet where no positive electrode active material layer is coated, or a component formed by the stacked connection of regions on the negative electrode sheet where no negative electrode active material layer is coated.

Exemplarily, in FIG. 4, the electrode assembly 22 can include two tabs 222, and the two tabs 222 are connected to one end of the main portion 221 that faces the first wall 211 along the thickness direction X of the first wall. The two tabs 222 are respectively configured for outputting or inputting the positive electrode and the negative electrode of the electrode assembly 22, serving as the positive output terminal and the negative output terminal of the electrode assembly 22. If the tab 222 is configured to output the positive electrode of the electrode assembly 22, then the corresponding tab 222 of the electrode assembly 22 is a component formed by the stacked connection of regions on the positive electrode sheet where no positive electrode active material layer is coated. If the tab 222 is configured to output the negative electrode of the electrode assembly 22, then the corresponding tab 222 of the electrode assembly 22 is a component formed by the stacked connection of regions on the negative electrode sheet where no negative electrode active material layer is coated.

Optionally, one or multiple electrode assemblies 22 can be accommodated within the housing 21. Exemplarily, in FIG. 4, two electrode assemblies 22 are provided, with the main portions 221 of the two electrode assemblies 22 stacked along their thickness direction. That is, the two electrode assemblies 22 are stacked along the thickness direction of the battery cell 20. Of course, in other embodiments, three, four, five, or six electrode assemblies 22 accommodated within the housing 21 can be arranged in a stacked manner.

Along a thickness direction X of the first wall, the first insulating member 23 is provided on a side of the first wall 211 facing the electrode assembly 22. That is to say, the first insulating member 23 is arranged between the first wall 211 and the electrode assembly 22 along the thickness direction X of the first wall, thus serving to insulate and isolate the electrode assembly 22 from the first wall 211. This is advantageous for reducing the risk of short circuits between the electrode assembly 22 and the first wall 211.

Exemplarily, the first insulating member 23 serves to insulate and isolate the electrode assembly 22 from the first wall 211. The material of the first insulating member 23 can be varied, such as polypropylene, polyethylene, or polycarbonate.

The support frame 24 is arranged between the main portion 221 and the first insulating member 23 along the thickness direction X of the first wall, thus allowing the support frame 24 to provide a certain support function for the main portion 221. This increases the stress-bearing area of the main portion 221 of the electrode assembly 22, thereby alleviating the phenomenon of excessive localized force on the main portion 221 of the electrode assembly 22; and it is advantageous for reducing the risk of damage to the main portion 221 of the electrode assembly 22 due to localized stress.

Exemplarily, the material of the support frame 24 can be varied, such as polypropylene, polyethylene, or polycarbonate.

The support frame 24 is thermally fused to the first insulating member 23. That is, a portion of the support frame 24 and a portion of the first insulating member 23 are fused together and then fixedly connected so that the portion of the support frame 24 is fused to the portion of the first insulating member 23. Exemplarily, there can be various methods for thermally fusing the support frame 24 to the first insulating member 23. For example, a local melting of the support frame 24 and the first insulating member 23 can be achieved through laser welding, to realize the thermal fusion connection between the support frame 24 and the first insulating member 23; or, local melting of the support frame 24 and the first insulating member 23 can be achieved through high-temperature melting, to realize the thermal fusion connection between the support frame 24 and the first insulating member 23.

In some embodiments, as shown in FIGS. 4, 5, and 6, the battery cell 20 can also include an electrode terminal 25. The electrode terminal 25 is mounted on the first wall 211; and the electrode terminal 25 is configured to connect with the tab 222 of the electrode assembly 22, thereby achieving an electrical connection between the electrode terminal 25 and the electrode assembly 22. Through the electrode terminal 25, the electrical energy of the battery cell 20 can be input or output.

Exemplarily, the battery cell 20 can include two electrode terminals 25, with the two electrode terminals 25 respectively serving as the positive output terminal and the negative output terminal of the battery cell 20. That is, the two electrode terminals 25 are respectively connected to the two tabs 222 of the electrode assembly 22, thereby enabling the output or input of the positive electrode and the negative electrode of the battery cell 20.

Optionally, the battery cell 20 can also include a current collector member 26, and the current collector member 26 is arranged in a one-to-one correspondence with the electrode terminal 25. The current collector member 26 is arranged between the support frame 24 and the first insulating member 23 along the thickness direction X of the first wall. The current collector member 26 is configured to connect the electrode terminal 25 and the tab 222 of the electrode assembly 22, thereby achieving an electrical connection between the electrode assembly 22 and the electrode terminal 25. Of course, in other embodiments, the battery cell 20 can also be not arranged with the current collector member 26. In other words, the tab 222 of the electrode assembly 22 is directly connected to the electrode terminal 25.

A portion of the first insulating member 23 is arranged between the current collector member 26 and the first wall 211 along the thickness direction X of the first wall. That is, the first insulating member 23 includes a portion that is located between the current collector member 26 and the first wall 211 along the thickness direction X of the first wall. This allows the first insulating member 23 to be fixed to the first wall 211 and effectively insulates and isolates the current collector member 26 from the first wall 211, and is advantageous for reducing the risk of short circuits between the current collector member 26 and the first wall 211.

In FIG. 6, a lead-out hole 2111 is arranged on the first wall 211, and the lead-out hole 2111 is arranged in one-to-one correspondence with the electrode terminal 25. The lead-out hole 2111 extends along the thickness direction X of the first wall, and both ends of the lead-out hole 2111 extend through both sides of the first wall 211 along the thickness direction X of the first wall, respectively. Each electrode terminal 25 passes through a corresponding lead-out hole 2111, so as to mount the electrode terminal 25 onto the first wall 211. Along the thickness direction X of the first wall, one end of the electrode terminal 25 is configured to connect with the current collecting member 26, and the other end is configured to connect with the busbar component inside the battery 100, thus enabling the input or output of electrical energy of the battery cell 20.

The electrode terminal 25 is mounted on the first wall 211 in an insulated manner, meaning that no electrical connection is formed between the electrode terminal 25 and the first wall 211. In other words, no electrical connection is formed between the electrode terminal 25 and the end cap 213 of the housing 21.

Optionally, a riveting block 251 can also be connected to the electrode terminal 25. Along the thickness direction X of the first wall, the riveting block 251 is arranged on the side of the first wall 211 away from the first insulating member 23, and the riveting block 251 is connected to the end of the electrode terminal 25 away from the current collecting member 26, so as to fix the electrode terminal 25 to the first wall 211.

In some embodiments, as shown in FIG. 6, the battery cell 20 can further include a second insulating member 27 and a sealing component 28, wherein the second insulating member 27 and the sealing component 28 are arranged in one-to-one correspondence with the electrode terminal 25. Along the thickness direction X of the first wall, at least a portion of the second insulating member 27 is arranged between the riveting block 251 and the first wall 211, to insulate and isolate the riveting block 251 from the first wall 211. This is advantageous for reducing the risk of short circuits between the riveting block 251 and the first wall 211. At least a portion of the sealing component 28 is arranged inside the lead-out hole 2111, and the sealing component 28 is configured to seal the gap between the electrode terminal 25 and the wall of the lead-out hole 2111. This is advantageous for reducing the risk of electrolyte leakage inside the battery cell 20.

Exemplarily, the material of the second insulating member 27 can be varied, such as plastic, rubber, or silicone. Similarly, the material of the sealing component 28 can also be varied, such as plastic, rubber, or silicone.

In some embodiments, the battery cell 20 can also include a pressure relief mechanism 29, and the pressure relief mechanism 29 is mounted on the housing 21. Optionally, the pressure relief mechanism 29 can be arranged on the end cap 213, or the pressure relief mechanism 29 can be arranged on the shell 212. Similarly, one or multiple pressure relief mechanisms 29 of the battery cell 20 can be provided. The pressure relief mechanism 29 is configured to release the internal pressure of the battery cell 20 when the internal pressure or the temperature of the battery cell 20 reaches a predetermined value.

The battery cell 20 is only provided with one pressure relief mechanism 29, and the pressure relief mechanism 29 is mounted on the end cap 213. The pressure relief mechanism 29 can be a pressure relief component such as a rupture valve, rupture disk, air valve, pressure relief valve, or safety valve.

A first insulating member 23, configured for insulating and isolating the electrode assembly 22 and the first wall 211, is provided in the housing 21; and the support frame 24 is connected to the first insulating member 23 by thermal fusion, so that the support frame 24 can be fixed on the first insulating member 23 to tightly fix the support frame 24 inside the housing 21. The battery cell 20 with the structure can reduce the phenomenon of the support frame 24 shifting or displacing during use, thereby reducing the risk of the support frame 24 damaging the electrode assembly 22 due to shifting or displacement, improving the stability and reliability of the battery cell 20 in use, and thus benefiting the improvement of the safety and service life of the battery cell 20. In addition, by using thermal fusion to fix the support frame 24 to the first insulating member 23, on the one hand, the connection stability between the support frame 24 and the first insulating member 23 can be improved, thus reducing the risk of separation between the support frame 24 and the first insulating member 23 during use; and on the other hand, it facilitates fixing the support frame 24 to the first insulating member 23, which is conducive to reducing assembly difficulty.

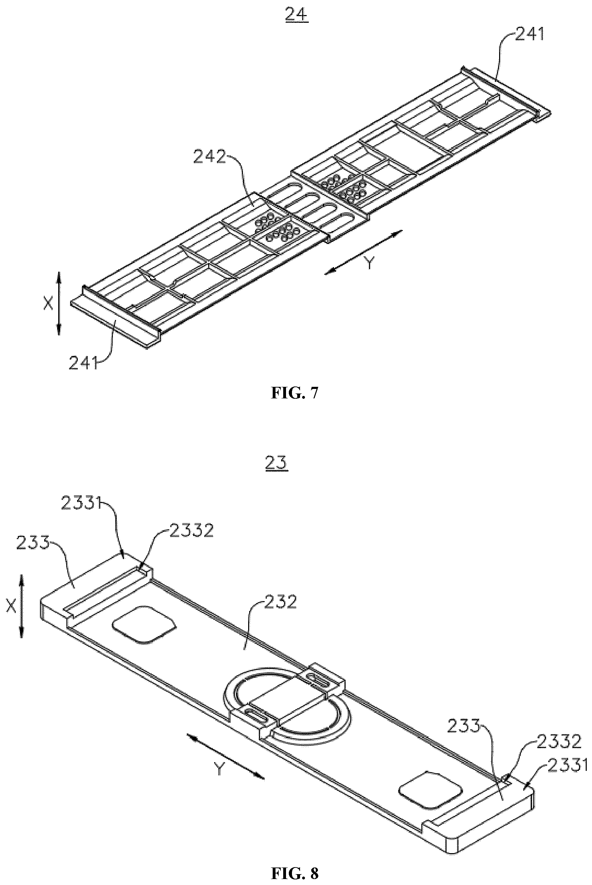

According to some embodiments of the present disclosure, with reference to FIGS. 5 and 6, and with further reference to FIGS. 7 and 8, FIG. 7 is a schematic diagram of a structure of a support frame 24 of a battery cell 20 provided in some embodiments of the present disclosure, and FIG. 8 is a schematic diagram of a structure of a first insulating member 23 of a battery cell 20 provided in some embodiments of the present disclosure. The support frame 24 is provided with a first connecting portion 241; the first insulating member 23 is provided with a second connecting portion 231; the first connecting portion 241 is thermally fused to the second connecting portion 231; and the light transmittance of the support frame 24 is T₁, and the light transmittance of the first insulating member 23 is T₂, satisfying a condition: T₁ > T₂.

The first connecting portion 241 of the support frame 24 and the second connecting portion 231 of the first insulation member 23 are connected by laser thermal fusion. In other words, a portion of the first connecting portion 241 of the support frame 24 and a portion of the second connecting portion 231 of the first insulating member 23 are melted through laser welding and connected to each other, and a fusion zone is formed between the first connecting portion 241 of the support frame 24 and the second connecting portion 231 of the first insulating member 23.

Light transmittance refers to the ability of light to pass through a medium, which is the percentage of the luminous flux passing through a transparent or translucent body to the incident luminous flux. In the embodiment of the present disclosure, the light transmittance T₁ of the first connecting portion 241 is greater than the light transmittance T₂ of the second connecting portion 231, meaning that the ability of the first connecting portion 241 to allow laser penetration is greater than the ability of the second connecting portion 231 to allow laser penetration. This enables the laser to penetrate the first connecting portion 241 of the support frame 24 and then irradiate the second connecting portion 231 of the first insulating member 23, so that the surfaces of the first connecting portion 241 of the support frame 24 and the second connecting portion 231 of the first insulating member 23 that are in contact with each other are enabled to be connected with each other after melting.

The first connecting portion 241 of the support frame 24 and the second connecting portion 231 of the first insulating member 23 are thermally fused to each other to achieve the fixation of the support frame 24 on the first insulating member 23. By setting the light transmittance of the first connecting portion 241 of the support frame 24 to be greater than the light transmittance of the second connecting portion 231 of the first insulating member 23, on the one hand, the first connecting portion 241 and the second connecting portion 231 with different light transmittances can be thermally fused by laser welding, which is conducive to reducing the assembly difficulty between the support frame 24 and the first insulating member 23. On the other hand, during the assembly of the battery cell 20, the laser can enter and penetrate the support frame 24 from the side of the support frame 24 facing the main portion 221 and act on the contact surface between the first connecting portion 241 and the second connecting portion 231, thereby achieving the laser thermal fusion between the first connecting portion 241 and the second connecting portion 231, which is conducive to reducing the assembly difficulty of laser welding between the support frame 24 and the first insulating member 23, improving the production efficiency of the battery cell 20, and facilitating the laser to penetrate the first connecting portion 241 of the support frame 24 and melt the contact surface between the second connecting portion 231 of the first insulating member 23 and the first connecting portion 241 of the support frame 24. Therefore, this enables the second connecting portion 231 of the first insulating member 23 and the first connecting portion 241 of the support frame 24 to be mutually melted and connected, effectively ensuring the connection quality between the first insulating member 23 and the support frame 24, and improving the stability and reliability of the connection between the first insulating member 23 and the support frame 24.

In some embodiments, the light transmittance of the first connecting portion 241 of the support frame 24 is T₁, satisfying the condition 40%≤T₁≤99%,

where 40% ≤ T₁ ≤ 99% means that the light transmittance of the first connecting portion 241 ranges from 40% to 99%. The material of the first connecting portion 241 of the support frame 24 can be varied, such as polypropylene, polyethylene, or polycarbonate.

Exemplarily, the light transmittance T₁ of the first connecting portion 241 can be 40%, 50%, 60%, 70%, 80%, 90%, or 99%.

During the experimental process, a second connecting portion 231 with a light transmittance of 5% was selected, and first connecting portions 241 with different light transmittance values were chosen for a single-variable experiment. This was done to measure the effect of varying the light transmittance of the first connecting portion 241 on the laser thermal fusion between the first connecting portion 241 and the second connecting portion 231. The results of the experiment are as follows.

**Table 1**

| Light transmittance T₁ of the first connecting portion 241 | Light transmittance T₂ of the second connecting portion 231 | Welding mark strength (peel-off force/N) |
|---|---|---|
| 10% | 5% | Unable to weld |
| 20% | | Unable to weld |
| 30% | | Unable to weld |
| 35% | | 0.5 |
| 40% | | 2.8 |
| 50% | | 2.9 |
| 60% | | 3.5 |
| 70% | | 3.7 |
| 80% | | 4.1 |
| 90% | | 4.1 |
| 99% | | 4.2 |

From the experimental data above, it can be seen that when the light transmittance of the first connecting portion 241 is less than 30%, the laser cannot weld the first connecting portion 241 and the second connecting portion 231, thus failing to meet assembly requirements. When the light transmittance of the first connecting portion 241 reaches 35%, although the first connecting portion 241 and the second connecting portion 231 can be welded to each other, the welding mark strength is insufficient. A force of only 0.5N is enough to cause the first connecting portion 241 and the second connecting portion 231 to detach. However, when the light transmittance of the first connecting portion 241 reaches 40%, the first connecting portion 241 and the second connecting portion 231 can be welded to each other, and the peel-off force of the welding mark strength can reach 2.8N, which meets the actual assembly requirements. Therefore, the light transmittance of the first connecting portion 241 is preferably set above 40%, which not only satisfies the laser welding requirements between the first connecting portion 241 and the second connecting portion 231 but also meets the welding strength requirements between the first connecting portion 241 and the second connecting portion 231.

Preferably, 60% ≤ T₁ ≤ 99%. Referring further to the experimental results mentioned above, when the light transmittance of the first connecting portion 241 reaches 60%, the first connecting portion 241 and the second connecting portion 231 can be welded to each other, and the peel-off force of the welding mark strength can reach 3.5N, which helps to further ensure the connection strength between the first connecting portion 241 and the second connecting portion 231. By further setting the light transmittance of the first connecting portion 241 of the support frame 24 to be between 60% and 99%, the light transmittance effect of the first connecting portion 241 can be further improved, thereby further enhancing the quality of laser thermal fusion between the first connecting portion 241 and the second connecting portion 231, and further improving the welding strength between the first connecting portion 241 and the second connecting portion 231.

By setting the light transmittance of the first connecting portion 241 of the support frame 24 to be between 40% and 99%, the light transmittance effect of the first connecting portion 241 of the support frame 24 can be effectively ensured, thereby alleviating the phenomenon where the laser cannot effectively penetrate the first connecting portion 241 of the support frame 24 due to the excessively low light transmittance of the first connecting portion 241 of the support frame 24, which would otherwise result in the failure of welding between the first connecting portion 241 of the support frame 24 and the second connecting portion 231 of the first insulating member 23. This facilitates the melting of the contact surface between the second connecting portion 231 of the first insulating member 23 and the first connecting portion 241 of the support frame 24 after the laser penetrates the first connecting portion 241 of the support frame 24, thereby enabling the mutual melting and connection of the first insulating member 23 and the support frame 24, and ensuring the connection quality between the first insulating member 23 and the support frame 24.

In some embodiments, the light transmittance of the second connecting portion 231 of the first insulating member 23 is T₂, satisfying the condition: 0%≤T₂≤10%

where 0%≤T₂≤10% means that the light transmittance of the second connecting portion 231 of the first insulating member 23 ranges from 0% to 10%. Exemplarily, the material of the second connecting portion 231 of the first insulating member 23 can be varied, such as polypropylene, polyethylene, or polycarbonate.

Exemplarily, the light transmittance T₂ of the second connecting portion 231 of the first insulating member 23 can be 0%, 1%, 2%, 3%, 5%, 7%, 9%, or 10%.

During the experimental process, a first connecting portion 241 with a light transmittance of 95% was selected, and second connecting portions 231 with different light transmittance values were chosen for a single-variable experiment. This was done to measure the effect of varying the light transmittance of the second connecting portion 231 on the laser thermal fusion between the first connecting portion 241 and the second connecting portion 231. The results of the experiment are as follows.

**Table 2**

| Light transmittance T₂ of the second connecting portion 231 | Light transmittance T₁ of the first connecting portion 241 | Welding mark strength (peel-off force/N) |
|---|---|---|
| 0% | 95% | 4.2 |
| 1% | | 4.2 |
| 2% | | 4.2 |
| 3% | | 4.1 |
| 5% | | 3.8 |
| 7% | | 3.5 |
| 8% | | 3.1 |
| 9% | | 3.9 |
| 10% | | 1.1 |
| 15% | | Unable to weld |
| 20% | | Unable to weld |

From the experimental data above, it can be seen that when the light transmittance of the second connecting portion 231 of the first insulating member 23 is greater than 10%, the laser cannot weld the second connecting portion 231 of the first insulating member 23 and the first connecting portion 241 of the support frame 24, thus failing to meet assembly requirements. When the light transmittance of the second connecting portion 231 of the first insulating member 23 is less than or equal to 10%, the second connecting portion 231 and the first connecting portion 241 can be welded to each other, and the peel-off force of the welding mark strength can reach 1.1 N, which meets the requirements for actual assembly. Therefore, the light transmittance of the second connecting portion 231 is preferably set under 10%, which not only satisfies the laser welding requirements between the second connecting portion 231 and the first connecting portion 241 but also meets the welding strength requirements between the second connecting portion 231 and the first connecting portion 241.

By setting the light transmittance of the second connecting portion 231 of the first insulating member 23 to be between 0% and 10%, the light transmittance effect of the second connecting portion 231 of the first insulating member 23 can be reduced, thereby effectively alleviating the phenomenon of the failure to melt the contact surface between the second connection portion 231 and the first connection portion 241 after the laser passes through the second connection portion 231, which is caused by the high transmittance of the second connection portion 231. Therefore, the laser can be concentrated on the contact surface between the second connecting portion 231 and the first connecting portion 241, which is conducive to ensuring the connection quality between the second connecting portion 231 and the first connecting portion 241 and reducing the risk of damage to other components of the battery cell 20 caused by the laser passing through the first insulating member 23; and this ensures the production quality of the battery cell 20.

According to some embodiments of the present disclosure, with reference to FIGS. 5, 6, and 7, along the thickness direction X of the first wall, the first connecting portion 241 and the second connecting portion 231 are arranged in a stacked manner and thermally fused.

The first connecting portion 241 and the second connecting portion 231 are arranged in a stacked manner and connected by thermal fusion. In other words, the first connecting portion 241 and the second connecting portion 231 are in contact with each other in the thickness direction X of the first wall, and are thermally fused at the position where the first connecting portion 241 and the second connecting portion 231 are in contact with each other, so that a portion of the support frame 24 is connected to a portion of the first insulating member 23.

The support frame 24 and the first insulating member 23 are provided with a first connecting portion 241 and a second connecting portion 231, respectively. By arranging the first connecting portion 241 and the second connecting portion 231 in a stacked manner and thermally fusing them, a fixed connection between the support frame 24 and the first insulating member 23 can be achieved. On the one hand, the battery cell 20 with the structure is easy to assemble, which is conducive to reducing the assembly difficulty between the support frame 24 and the first insulating member 23. On the other hand, after stacking the first connecting portion 241 and the second connecting portion 231 and then thermally fusing them, the assembly quality between the support frame 24 and the first insulating member 23 is improved, thus enhancing the stability and reliability of the connection between the support frame 24 and the first insulating member 23.

In some embodiments, as shown in FIG. 6, along the thickness direction X of the first wall, a thickness of the first connecting portion 241 is D₁, satisfying a condition: 0.5mm≤D₁≤2.5mm,

wherein 0.5 mm ≤ D₁ ≤ 2.5 mm means that the first connecting portion 241 has a dimension of 0.5 mm to 2.5 mm in the thickness direction X of the first wall.

Exemplarily, the thickness D₁ of the first connecting portion 241 can be 0.5mm, 0.6mm, 0.7mm, 0.8mm, 1mm, 1.5mm, 2mm, or 2.5mm.

During the experimental process, a first connecting portion 241 with a light transmittance of 95%, and a second connecting portion 231 with a light transmittance of 5% were selected. The thickness of the second connecting portion 231 of the first insulating member 23 was set to 2mm, and the thickness of the first connecting portion 241 of the support frame 24 in the thickness direction X of the first wall was set to different sizes, so as to conduct the experiment. The effect of different thicknesses of the first connecting portion 241 on the laser thermal fusion connection between the first connecting portion 241 and the second connecting portion 231 is measured. The results of the experiment are as follows.

**Table 3**

| Thickness D₁ of the first connecting portion 241/mm | Thickness D₂ of the second connecting portion 231/mm | Welding mark strength (peel-off force/N) |
|---|---|---|
| 0.3 | 2 | Weld-through |
| 0.4 | | Weld-through |
| 0.5 | | 3.5 |
| 0.6 | | 3.8 |
| 0.8 | | 3.9 |
| 1 | | 3.9 |
| 1.5 | | 4 |
| 2 | | 4.1 |
| 2.5 | | 4.2 |
| 3 | | 4.2 |
| 3.5 | | 4.2 |

From the above experimental data, it can be seen that when the thickness of the first connecting portion 241 is less than 0.5mm, the first connecting portion 241 experiences a phenomenon of being welded through during the process of the laser thermal fusion connection, which fails to meet assembly requirements. When the thickness of the first connecting portion 241 reaches 0.5mm, the phenomenon of the first connecting portion 241 being welded through can be alleviated, and the welding strength between the first connecting portion 241 and the second connecting portion 231 can be ensured. Therefore, the thickness of the first connecting portion 241 is set to be greater than or equal to 0.5mm.

After the thickness of the first connecting portion 241 reaches 2.5mm, the phenomenon of the first connecting portion 241 being welded through can be alleviated, and the welding strength between the first connecting portion 241 and the second connecting portion 231 can be ensured; however, the improvement in the increase of welding strength between the first connecting portion 241 and the second connecting portion 231 becomes insignificant after the thickness of the first connecting portion 241 is greater than 2.5mm. Therefore, in order to save the material of the first connecting portion 241 and to optimize the space occupied by the first connecting portion 241, the thickness of the first connecting portion 241 is preferably set to be less than or equal to 2.5mm.

By setting the thickness of the first connecting portion 241 between 0.5mm and 2.5mm, on the one hand, it is possible to alleviate the phenomenon of the insufficient structural strength of the first connecting portion 241 due to the thickness of the first connecting portion 241 being too small, thus reducing the occurrence of deformation in the first connecting portion 241 during the thermal fusion process with the second connecting portion 231; this effectively lowers the risk of gaps or connection failure between the first connecting portion 241 and the second connecting portion 231, and is conducive to improving the connection quality and the connection stability between the first connecting portion 241 and the second connecting portion 231. On the other hand, it can alleviate the phenomenon of material waste or excessive assembly difficulty due to the too-large thickness of the first connecting portion 241, which is conducive to reducing the manufacturing cost of the battery cell 20.

In some embodiments, referring to FIG. 6, along thickness direction X of the first wall, a thickness of the second connecting portion 231 is D₂, satisfying a condition: 0.5mm≤D₂≤2.5mm,

wherein 0.5 mm ≤ D₂ ≤ 2.5 mm means that the second connecting portion 231 has a dimension of 0.5 mm to 2.5 mm in the thickness direction X of the first wall.

Exemplarily, the thickness D₂ of the second connecting portion 231 can be 0.5mm, 0.6mm, 0.7mm, 0.8mm, 1mm, 1.5mm, 2mm, or 2.5mm.

During the experimental process, a first connecting portion 241 with a light transmittance of 95%, and a second connecting portion 231 with a light transmittance of 5% were selected. At the same time, the thickness of the first connecting portion 241 of the support frame 24 was set to 2mm, and the thickness of the second connecting portion 231 of the first insulating member 23 in the thickness direction X of the first wall was set to different sizes, so as to conduct the experiment. The effect of different thicknesses of the second connecting portion 231 on the laser thermal fusion connection between the first connecting portion 241 and the second connecting portion 231 is measured. The results of the experiment are as follows.

**Table 4**

| Thickness D₂ of the second connecting portion 231/mm | Thickness D₁ of the first connecting portion 241/mm | Welding mark strength (peel-off force/N) |
|---|---|---|
| 0.3 | 2 | Weld-through |
| 0.4 | | Weld-through |
| 0.5 | | 3.4 |
| 0.6 | | 3.5 |
| 0.8 | | 3.6 |
| 1 | | 3.8 |
| 1.5 | | 4 |
| 2 | | 4.1 |
| 2.5 | | 4.2 |
| 3 | | 4.2 |
| 3.5 | | 4.2 |

From the above experimental data, it can be seen that when the thickness of the second connecting portion 231 is less than 0.5mm, the second connecting portion 231 experiences a phenomenon of being welded through during the process of the laser thermal fusion connection, which fails to meet assembly requirements. When the thickness of the second connecting portion 231 reaches 0.5mm, the phenomenon of the second connecting portion 231 being welded through can be alleviated, and the welding strength between the first connecting portion 241 and the second connecting portion 231 can be ensured. Therefore, the thickness of the second connecting portion 231 is set to be greater than or equal to 0.5mm.

After the thickness of the second connecting portion 231 reaches 2.5mm, the phenomenon of the second connecting portion 231 being welded through can be alleviated, and the welding strength between the first connecting portion 241 and the second connecting portion 231 can be ensured; however, the improvement in the increase of welding strength between the first connecting portion 241 and the second connecting portion 231 becomes insignificant after the thickness of the second connecting portion 231 is greater than 2.5mm. Therefore, in order to save the material of the second connecting portion 231 and to optimize the space occupied by the second connecting portion 231, the thickness of the second connecting portion 231 is preferably set to be less than or equal to 2.5mm.

By setting the thickness of the second connecting portion 231 between 0.5mm and 2.5mm, on the one hand, it is possible to alleviate the phenomenon of the insufficient structural strength of the second connecting portion 231 due to the thickness of the second connecting portion 231 being too small, thus reducing the occurrence of deformation in the second connecting portion 231 during the thermal fusion process with the first connecting portion 241; this effectively lowers the risk of gaps or connection failure between the second connecting portion 231 and the first connecting portion 241, and is conducive to improving the connection quality and the connection stability between the second connecting portion 231 and the first connecting portion 241. On the other hand, it can alleviate the phenomenon of material waste or excessive assembly difficulty due to the too-large thickness of the second connecting portion 231, which is conducive to reducing the manufacturing cost of the battery cell 20.

According to some embodiments of the present disclosure, with reference to FIG. 5, FIG. 6, and FIG. 7, the support frame 24 further includes a main body portion 242; along the first direction Y, the first connecting portion 241 protrudes from one end of the main body portion 242; and the first direction Y is perpendicular to the thickness direction X of the first wall.

Along the first direction Y, one end of the first connecting portion 241 protrudes from the main body portion 242. In other words, the first connecting portion 241 is connected to one end of the main body portion 242 in the first direction Y, and the first connecting portion 241 protrudes from the main body portion 242. The first direction Y is the length direction of the support frame 24, which is also the length direction of the end cap 213.

Exemplarily, the first connecting portion 241 and the main body portion 242 form an integrally molded structure. In other words, the first connecting portion 241 and the main body portion 242 are formed using an integral molding process such as injection molding or extrusion molding to form the integrated structure of the support frame 24. Of course, the structure of the support frame 24 is not limited to this. In other embodiments, the first connecting portion 241 and the main body portion 242 can also be a split structure, and the first connecting portion 241 can be connected to one end of the main body portion 242 in the first direction Y through methods such as bonding, clamping, or thermal fusion.

The support frame 24 is also provided with a main body portion 242, and the first connecting portion 241 is the part of the support frame 24 that protrudes from one end of the main body portion 242 in the first direction. In other words, the first connecting portion 241 of the support frame 24 configured to connect with the first insulating member 23 is located at one end of the support frame 24 in the first direction Y. The support frame 24 with the structure can effectively avoid other components of the battery cell 20, thus facilitating the assembly of the support frame 24 and the first insulating member 23, and reducing assembly difficulty.

In some embodiments, referring to FIGS. 6 and 7, along the first direction Y, both ends of the main body portion 242 are provided with the first connecting portion 241 in a protruding manner, and the first connecting portion 241 is arranged to correspond one-to-one with the second connecting portion 231.

Both ends of the main body portion 242 are provided with the first connecting portions 241 in a protruding manner. That is to say, the support frame 24 includes two first connecting portions 241, and each of the two first connecting portions 241 is connected to one of the two ends of the main body portion 242 in the first direction Y.

The first connecting portions 241 and the second connecting portions 231 are arranged in a one-to-one correspondence. In other words, the first insulating member 23 is also provided with two second connecting portions 231, and each second connecting portion 231 is arranged to be stacked with one first connecting portion 241 in the thickness direction X of the first wall and connected through thermal fusion.

Both ends of the main body portion 242 of the support frame 24 in the first direction are provided with the first connecting portion 241, and the first insulating member 23 is correspondingly provided with two second connecting portions 231, so that both ends of the support frame 24 in the first direction Y can be fixed to the first insulating member 23. This is conducive to further improving the stability and reliability of the connection between the support frame 24 and the first insulating member 23, and to reducing the risk of detachment between the support frame 24 and the first insulating member 23 during use.

According to some embodiments of the present disclosure, with reference to FIG. 6 and FIG. 8, The first insulating member 23 includes an insulating body 232 and a protrusion 233. Along a thickness direction X of the first wall, the insulating body 232 is provided on a side of the first wall 211 facing the electrode assembly 22. The protrusion 233 is provided on one side of the insulating body 232 facing the electrode assembly 22 in a protruding manner; and the protrusion 233 is provided with the second connecting portion 231.

Along a thickness direction X of the first wall, the insulating body 232 is provided on a side of the first wall 211 facing the electrode assembly 22. That is to say, the insulating body 232 is arranged between the electrode assembly 22 and the first wall 211 along the thickness direction X of the first wall, thus insulating and isolating the electrode assembly 22 from the first wall 211.

The protrusion 233 is provided with the second connecting portion 231. In other words, the first connecting portion 241 of the support frame 24 is attached to the protrusion 233 of the first insulating member 23.

The first insulating member 23 is provided with an insulating body 232 and a protrusion 233 provided in a protruding manner on the insulating body 232, and the protrusion 233 is provided with the second connecting portion 231. Therefore, the first connecting portion 241 of the support frame 24 is connected to the protrusion 233 of the first insulating member 23. The first insulating member 23 with the structure facilitates the assembly of the first insulating member 23 and the support frame 24, which is conducive to reducing the connection difficulty between the first connecting portion 241 and the second connecting portion 231.

According to some embodiments of the present disclosure, with reference to FIG. 6 and

FIG. 8, Along the thickness direction X of the first wall, the protrusion 233 is provided with a first surface 2331 facing the electrode assembly 22; the first surface 2331 is provided with a first groove 2332; the first connecting portion 241 abuts the bottom surface of the first groove 2332; the insulating body 232 is provided with a second surface 2321 abutting the first wall 211; the second surface 2321 is provided with a second groove 2322; and a portion of the protrusion 233 located between the bottom surface of the first groove 2332 and the bottom surface of the second groove 2322 forms the second connecting portion 231.

The portion of the protrusion 233 located between the bottom surface of the first groove 2332 and the bottom surface of the second groove 2322 forms the second connecting portion 231. That is to say, the protrusion 233 is provided with the first groove 2332 and the second groove 2322 respectively on both sides in the thickness direction X of the first wall, and the region of the protrusion 233 between the bottom surface of the first groove 2332 and the bottom surface of the second groove 2322 is the second connecting portion 231 of the first insulating member 23.

By providing the first groove 2332 on the first surface 2331 of the protrusion 233 and providing the second groove 2322 on the second surface 2321 of the insulating body 232, the portion of the protrusion 233 between the bottom surface of the first groove 2332 and the bottom surface of the second groove 2322 forms the second connecting portion 231 configured for thermal fusion connection with the first connecting portion 241. The first insulating member 23 with the structure can thin the thickness of the second connecting portion 231 while ensuring the structural strength of the protrusion 233, making it easier to control the thickness of the second connecting portion 231. This is conducive to improving the connection quality between the second connecting portion 231 and the first connecting portion 241. In addition, after the first connecting portion 241 abuts the bottom surface of the first groove 2332 and is thermally fused with the second connecting portion 231, the first groove 2332 can accommodate at least a portion of the first connecting portion 241, which is beneficial for providing a certain protective effect to the first connecting portion 241 to reduce the occurrence of the wear of the first connecting portion 241 during the assembly or use process.

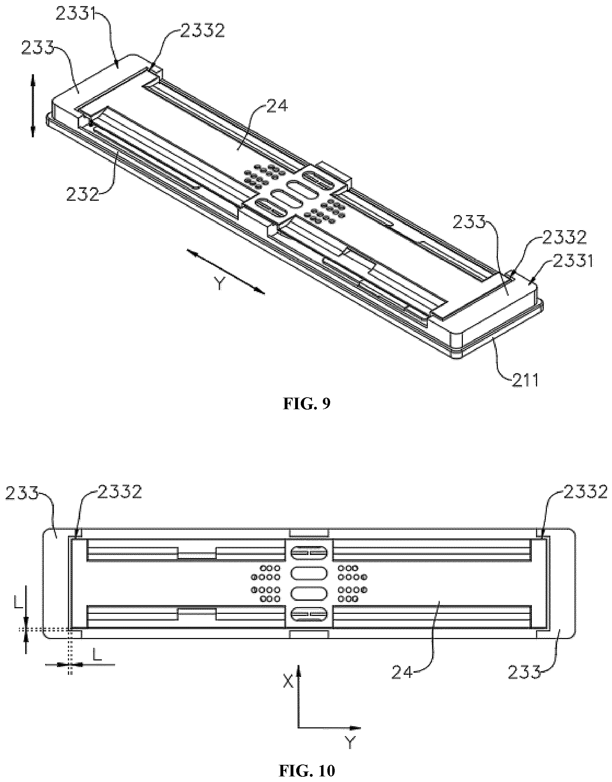

According to some embodiments of the present disclosure, with reference to FIGS. 6 and 8, and with further reference to FIG. 9, FIG. 9 is a schematic view of a connection between a support frame 24 and a first insulating member 23 provided by some embodiments of the present disclosure. The first insulating member 23 includes an insulating body 232 and two protrusions 233. Along a thickness direction X of the first wall, the insulating body 232 is provided on a side of the first wall 211 facing the electrode assembly 22. The two protrusions 233 are provided in a protruding manner on one side of the insulating body 232 facing the electrode assembly 22; along the first direction Y, the two protrusions 233 are arranged at intervals, and a holding space 234 is formed between the two protrusions 233; the holding space 234 is configured to accommodate at least a portion of the support frame 24; and the first direction Y is perpendicular to the thickness direction X of the first wall.

A holding space 234 is formed between the two protrusions 233, and the holding space 234 is configured to accommodate at least a portion of the support frame 24. That is, the support frame 24 is accommodated in the first direction Y between the two protrusions 233 of the first insulating member 23.

By accommodating at least a portion of the support frame 24 in the holding space 234 formed between the two protrusions 233 of the first insulating member 23, it can provide a certain limiting and positioning effect on the support frame 24. On one hand, it facilitates the assembly of the support frame 24 and can provide a certain protective effect for the support frame 24. On the other hand, it can further reduce the occurrence of movement of the support frame 24 during the assembly or use process of the battery cell 20, thereby reducing the risk of the support frame 24 damaging the electrode assembly 22 due to the movement, which is conducive to improving the safety and service life of the battery cell 20.

In some embodiments, referring to FIGS. 6 and 9, along the thickness direction X of the first wall, the protrusion 233 is provided with a first surface 2331 facing the main portion 221, and the support frame 24 does not extend beyond the first surface 2331.

The support frame 24 does not extend beyond the first surface 2331, that is to say, the entire support frame 24 is accommodated between the two protrusions 233, such that the support frame 24 does not extend beyond the first surface 2331 of the protrusions 233 in the thickness direction X of the first wall. Of course, in other embodiments, the support frame 24 can also be partially accommodated between the two protrusions 233, that is, a portion of the support frame 24 extends beyond the first surface 2331 along the thickness direction X of the first wall.

Arranging the support frame 24 in the thickness direction X of the first wall not to extend beyond the first surface 2331 of the protrusion 233 means that the entire support frame 24 is accommodated within the holding space 234, which, on one hand, can enhance the limiting effect of the first insulating member 23 on the support frame 24 and is conducive to improving the protective effect of the first insulating member 23 on the support frame 24. On the other hand, it can save the space occupied by the first insulating member 23 and the support frame 24, which is conducive to optimizing the internal space of the battery cell 20 and improving the utilization rate of the internal space of the battery cell 20.

According to some embodiments of the present disclosure, with reference to FIGS. 6, 7, 8, and 9, the support frame 24 includes a main body portion 242 and a first connecting portion 241; the main body portion 242 is accommodated in the holding space 234; along the first direction Y, and the first connecting portion 241 protrudes from at least one end of the main body portion 242; along the thickness direction X of the first wall, the protrusion 233 is provided with a first surface 2331 facing the main portion 221; the first surface 2331 is provided with a first groove 2332; along the first direction Y, the first groove 2332 penetrates through the protrusion 233 and communicates with the holding space 234; the first connecting portion 241 extends into the first groove 2332; and the first connecting portion 241 is thermally fused to the bottom surface of the first groove 2332.

Along the first direction Y, the first connecting portion 241 protrudes from at least one end of the main body portion 242. That is, the main body portion 242 can be provided with the first connecting portion 241 at one end in the first direction Y, or it can be provided with the first connecting portion 241 at both ends in the first direction Y. Exemplarily, in FIG. 7, the first connecting portions 241 are arranged at both ends of the main body portion 242 in the first direction Y.

Along the first direction Y, the first groove 2332 passes through the protrusion 233 and communicates with the holding space 234. The first connecting portion 241 extends into the first groove 2332. In other words, the first groove 2332 arranged on the first surface 2331 of the protrusion 233 passes through the side of the protrusion 233 facing the holding space 234 along the first direction Y, thereby enabling the first groove 2332 to communicate with the holding space 234. Therefore, the first connecting portion 241 of the support frame 24 can extend from the holding space 234 into the first groove 2332.

The first connecting portion 241 is thermally fused to the bottom surface of the first groove 2332, meaning that the bottom wall of the first groove 2332 is the second connecting portion 231 of the first insulating member 23.

By providing a first groove 2332 on the first surface 2331 of the protrusion 233 facing the main portion 221, and the first groove 2332 penetrates through the protrusion 233 along the first direction Y and communicates with the holding space 234, the protrusion 233 forms a stepped structure. By accommodating the main body portion 242 of the support frame 24 in the holding space 234 and arranging the first connecting portion 241 of the support frame 24 to extend into the first groove 2332, with the first connecting portion 241 abutting and thermally fused to the bottom surface of the first groove 2332, the protrusion 233 can provide a certain limiting and positioning effect on the support frame 24 in the thickness direction X of the first wall. This improves the assembly quality between the support frame 24 and the first insulating member 23 and facilitates the thermal fusion connection between the support frame 24 and the first insulating member 23, which is conducive to reducing the assembly difficulty.

According to some embodiments of the present disclosure, with reference to FIG. 6, FIG. 8, and FIG. 9, and with further reference to FIG. 10, FIG. 10 is a bottom view of a support frame 24 connected to a first insulating member 23 provided by some embodiments of the present disclosure. The first connecting portion 241 and the groove side surface of the first groove 2332 are arranged at intervals, and the distance between the first connecting portion 241 and the groove side surface of the first groove 2332 is L, satisfying a condition: 0.8mm ≤ L ≤ 2mm.

The first connecting portion 241 and the groove side surface of the first groove 2332 are arranged at intervals. That is, in a direction perpendicular to the thickness direction X of the first wall, a gap is arranged between the first connecting portion 241 of the support frame 24 and the groove side surface of the first groove 2332.

The distance between the first connecting portion 241 and the groove side surface of the first groove 2332 is L, satisfying a condition: 0.8mm ≤ L ≤ 2mm. In other words, the size of the gap between the first connecting portion 241 and the groove side surface of the first groove 2332 is from 0.8 mm to 2 mm.

Exemplarily, the distance L between the first connecting portion 241 and the groove side surface of the first groove 2332 can be 0.8 mm, 1 mm, 1.2 mm, 1.5 mm, 1.8 mm, or 2 mm.

By setting the distance between the first connecting portion 241 of the support frame 24 and the groove side surface of the first groove 2332 between 0.8mm and 2mm, on one hand, it can alleviate the phenomenon where the distance between the first connecting portion 241 accommodated in the first groove 2332 and the groove side surface of the first groove 2332 is too small, which could cause excessive assembly difficulty and high assembly precision requirements when assembling the support frame 24 into the holding space 234 and the first groove 2332. Thereby, it is conducive to reducing the difficulty of assembly between the support frame 24 and the first insulating member 23, thus enhancing assembly efficiency. On the other hand, it can alleviate the phenomenon where the distance between the first connecting portion 241 of the support frame 24 and the groove side surface of the first groove 2332 is too large, which could lead to poor limiting and positioning effects of the first groove 2332 on the support frame 24.

According to some embodiments of the present disclosure, with reference to FIG. 4, FIG. 5, and FIG. 6, the battery cell 20 further includes two electrode terminals 25, and the electrode terminals 25 are arranged on the first wall 211. The electrode assembly 22 further includes a tab 222, and along the thickness direction X of the first wall, the tab 222 protrudes from one end of the main portion 221 facing first wall 211; the tab 222 is bent around the support frame 24; and tab 222 is connected to the electrode terminal 25.

The electrode terminal 25 outputs or inputs the electrical energy of the battery cell 20. The material of the electrode terminal 25 can be various, such as copper, iron, aluminum, steel, and aluminum alloy.

Along the thickness direction X of the first wall, the tab 222 protrudes from the end of the main portion 221 facing the first wall 211, that is, the electrode assembly 22 is provided with the tab 222 at the end close to the first wall 211 in the thickness direction X of the first wall.

If the tab 222 is configured to output the positive electrode of the electrode assembly 22, then the tab 222 is a component formed by the stacked connection of regions on the positive electrode sheet where no positive electrode active material layer is coated. If the tab 222 is configured to output the negative electrode of the electrode assembly 22, then the tab 222 is a component formed by the stacked connection of regions on the negative electrode sheet where no negative electrode active material layer is coated. Exemplarily, the electrode assembly 22 is provided with two tabs 222, and the two tabs 222 are arranged in a protruding manner at one end of the main portion 221 that faces the first wall 211. The two tabs 222 outputs or inputs the positive electrode and the negative electrode of the electrode assembly 22, respectively.

Exemplarily, two electrode terminals 25 are provided, and the two electrode terminals 25 are mounted on the first wall 211, and each electrode terminal 25 is connected to one tab 222, thus enabling the two electrode terminals 25 to output or input the positive electrode and the negative electrode of the battery cell 20.

The tab 222 is bent around the support frame 24, that is, the tab 222 is connected to the electrode terminal 25 located on the side of the support frame 24 away from the main portion 221 after being bent around the support frame 24 from one end of the main portion 221. This reduces the occurrence of the tab 222 being inserted back into the main portion 221, thus helping to lower the risk of short circuits in the battery cell 20.

Exemplarily, the tab 222 bends around the main body portion 242 of the support frame 24 before connecting to the electrode terminal 25.

It should be noted that, in other embodiments, the tab 222 can also be arranged as a non-bending structure around the support frame 24, that is, the tab 222 is positioned on the side of the support frame 24 facing the main portion 221 in the thickness direction X of the first wall. In the embodiment, it is only necessary to connect a connecting piece between the current collecting member 26 and the tab 222 to achieve the electrical connection between the current collecting member 26 and the tab 222. The connecting piece can be a wire, a U-shaped connecting piece, or an L-shaped connecting piece, among others.

The electrode terminal 25 is provided on the first wall 211 of the housing 21, and the tab 222 is provided at one end of the main portion 221 facing the first wall 211. By arranging the tab 222 to be bent around the support frame 24 and then connected to the electrode terminal 25, the electrical connection between the electrode assembly 22 and the electrode terminal 25 is realized, thereby enabling the input or output of the electrical energy of the battery cell 20. The battery cell 20 with the structure positions the part where the tab 222 is connected to the electrode terminal 25 on the side of the support frame 24 away from the main portion 221, which can effectively alleviate the phenomenon of the tab 222 being inserted backward into the main portion 221 of the electrode assembly 22 during assembly or use, thereby reducing the short-circuit risk of the battery cell 20 and improving the safety of the battery cell 20. In addition, since the support frame 24 is thermally fused to the first insulating member 23, it can effectively reduce the occurrence of movement or displacement of the support frame 24 during the use of the battery cell 20, thereby reducing the risk of the support frame 24 damaging the shape of the tab 222 or causing damage to the tab 222 due to movement. This alleviates the occurrence of short circuits between the tab 222 and other components or the failure of the connection between the electrode assembly 22 and the electrode terminal 25, which is conducive to improving the safety and service life of the battery cell 20.

According to some embodiments of the present disclosure, with reference to FIGS. 4, 5, and 6, the battery cell 20 further includes a current collector member 26; along the thickness direction X of the first wall, the current collector member 26 is provided between the first insulating member 23 and the support frame 24, and the current collector member 26 connects the electrode terminal 25 and the tab 222.

The current collector member 26 serves to connect the electrode terminal 25 and the tab 222 of the electrode assembly 22 to establish an electrical connection between the electrode assembly 22 and the electrode terminal 25. The material of the current collector member 26 can be diverse, such as copper, iron, aluminum, steel, aluminum, and alloy.

Exemplarily, the current collecting member 26 is welded to both the electrode terminal 25 and the tab 222.

The current collecting member 26 is arranged between the first insulating member 23 and the support frame 24, that is, in the thickness direction X of the first wall, the first insulating member 23 and the support frame 24 are respectively positioned on each side of the current collecting member 26, such that the first insulating member 23 is located between the current collecting member 26 and the first wall 211, thus insulating and isolating the current collecting member 26 and the first wall 211.

Exemplarily, two current collector members 26 are provided, and each current collector member 26 is connected to one electrode terminal 25 and one tab 222, thereby achieving an electrical connection between the electrode assembly 22 and the two electrode terminals 25.

It should be noted that, in an embodiment where the first insulating member 23 includes an insulating body 232 and a protrusion 233 that protrudes from a side of the insulating body 232 facing the electrode assembly 22 along the thickness direction X of the first wall, the current collecting member 26 is positioned between the main body portion 242 of the support frame 24 and the insulating body 232 of the first insulating member 23 in the thickness direction X of the first wall. This enables the connection of the current collecting member 26 with the electrode terminal 25 and the tab 222. Moreover, the insulating body 232 of the first insulating member 23 can insulate and isolate the first wall 211 and the current collecting member 26.

The battery cell 20 is further provided with a current collector member 26. The current collector member 26 is connected to the electrode terminal 25 and the current collector member 26 is provided between the first insulating member 23 and the support frame 24, so as to connect the current collector member 26 to the electrode terminal 25 and the tab 222 of the electrode assembly 22. This realizes the electrical connection between the electrode assembly 22 and the electrode terminal 25 to output or input the electrical energy of the battery cell 20. The structure facilitates the connection of the tab 222 to the current collector member 26, which is conducive to reducing the assembly difficulty between the tab 222 and the electrode terminal 25.

According to some embodiments of the present disclosure, with reference to FIG. 3 and FIG. 4, the housing 21 includes a shell 212 and an end cap 213. An accommodating cavity with an opening 2121 is formed inside the shell 212, and the electrode assembly 22 is accommodated within the accommodating cavity. The end cap 213 seals the opening 2121, and the end cap 213 is the first wall 211.

Specifically, the end cap 213 is the first wall 211, meaning that the first insulating member 23 and the support frame 24 are arranged between the end cap 213 and the main portion 221 of the electrode assembly 22 in the thickness direction X of the first wall.

The first wall 211 of the housing 21 is an end cap 213 of the housing 21 configured for closing the opening 2121 of the shell 212. The battery cell 20 with the structure facilitates the assembly of the support frame 24 and the first insulating member 23, and is beneficial for reducing the assembly difficulty of the first insulating member 23 into the housing 21 and between the support frame 24 and the first insulating member 23, thereby contributing to improving the production efficiency of the battery cell 20.

It should be noted that the structure of the battery cell 20 is not limited to this. In some embodiments, the battery cell 20 can be of other structures. For example, the housing 21 includes a shell 212 and an end cap 213; the shell 212 includes a side wall and the first wall 211 which are integrally molded, with the side wall arranged around the first wall 211. Along the thickness direction X of the first wall, one end of the side wall is connected to the first wall 211, and the other end encloses to form an opening 2121. The side wall and the first wall 211 together define an accommodating cavity configured for accommodating the electrode assembly 22; and the end cap 213 closes the opening 2121. That is to say, the first wall 211 is the bottom wall of the shell 212 that is arranged opposite to the end cap 213 along the thickness direction X of the first wall. The first insulating member 23 and the support frame 24 are arranged between the bottom wall of the shell 212, which is arranged opposite to the end cap 213 in the thickness direction X of the first wall, and the main portion 221 of the electrode assembly 22.

The shell 212 includes a side wall and the first wall 211 which are integrally molded, meaning that the shell 212 is manufactured using an integral molding process, such as stamping, casting, or extrusion molding. That is to say, the side wall and the first wall 211 of the shell 212 form an integrated structure.

The first wall 211 is a wall of the shell 212 that is arranged opposite to the end cap 213 along the thickness direction X of the first wall. The battery cell 20 with the structure can enable components such as the first insulating member 23 and the support frame 24 to be positioned away from the end cap 213, and ensure that there is no direct connection relationship between the first wall 211 and the end cap 213. Thus, it prevents the phenomenon where the forces, generated when the components like the first insulating member 23 and the support frame 24 pull and twist the first wall 211, are applied the end cap 213, thereby reducing the risk of connection failure between the end cap 213 and the shell 212. This is further conducive to reducing the risk of leakage during the use of the battery cell 20.

According to some embodiments of the present disclosure, the embodiments of the present disclosure provide a battery 100, including the battery cell 20 according to any of the above solutions.

The battery 100 can further include a box 10, wherein the battery cell 20 is accommodated within the box 10.

Optionally, one or multiple battery cells 20 can be accommodated within the box 10. Exemplarily, in FIG. 2, the battery 100 includes multiple battery cells 20, and all the battery cells 20 are accommodated within the box 10. The multiple battery cells 20 can be connected in series, parallel, or hybrid. A hybrid connection refers to having both series and parallel connections among multiple battery cells 20. The multiple battery cells 20 can be directly connected in series, parallel, or hybrid, and then the whole comprising the multiple battery cells 20 is housed in the box 10.

According to some embodiments of the present disclosure, the present disclosure provides an electric device, comprising a battery 100 of any of the above solutions, and the battery 100 is configured to provide electrical energy to the electric device.

The electric device can be any of the above-mentioned devices or systems that apply the battery 100.

According to some embodiments of the present disclosure, referring to FIGS. 3 to 10, the present disclosure provides a battery cell 20, wherein the battery cell 20 includes a housing 21, an electrode terminal 25, a current collector member 26, an electrode assembly 22, a first insulating member 23, and a support frame 24. The housing 21 includes a shell 212 and end cap 213, the interior of the shell 212 forms an accommodating cavity with an opening 2121, and the electrode assembly 22 is accommodated in the accommodating cavity. The end cap 213 closes the opening 2121, wherein the end cap 213 is the first wall 211. The electrode terminal is connected to the first wall 211 and the current collector member 26 is connected to the electrode terminal 25. The electrode assembly 22 is accommodated within the housing 21, and the electrode assembly 22 includes a main portion 221 and a tab 222. Along the thickness direction X of the first wall, the tab 222 protrudes from the end of the main portion 221 facing the first wall 211, and the tab 222 is connected to the current collector member 26. Along a thickness direction X of the first wall, the first insulating member 23 is provided between the first wall 211 and the current collector member 26. The first insulating member 23 is configured for insulating and isolating the current collector member 26 and the first wall 211. The first insulating member 23 includes an insulating body 232 and two protrusions 233. Along a thickness direction X of the first wall, the insulating body 232 is provided on a side of the first wall 211 facing the electrode assembly 22. The protrusion 233 is provided on one side of the insulating body 232 facing the electrode assembly 22 in a protruding manner, and the two protrusions 233 are arranged at intervals along the first direction Y and together define the holding space 234. The protrusion 233 is provided with a first surface 2331 facing the electrode assembly 22; the first surface 2331 is provided with a first groove 2332; the insulating body 232 is provided with a second surface 2321 abutting the first wall 211; the second surface 2321 is provided with a second groove 2322; and a portion of the protrusion 233 located between the bottom surface of the first groove 2332 and the bottom surface of the second groove 2322 forms the second connecting portion 231. The support frame 24 includes a main body portion 242 and first connecting portions 241 that protrude from both ends of the main body portion 242 along the first direction Y. The main body portion 242 is accommodated within the holding space 234, and the current collector member 26 is positioned between the main body portion 242 and the insulating body 232 of the first insulating member 23. The tab 222 bends around the main body portion 242, and the tab 222 is connected to the current collector member 26. The first connecting portion 241 extends into the first groove 2332 along the first direction Y. The first connecting portion 241 and the second connecting portion 231 are arranged in a stacked manner along the thickness direction X of the first wall and are connected through thermal fusion. The first direction Y is perpendicular to the thickness direction X of the first wall. The light transmittance of the first connecting portion 241 is T₁, and the light transmittance of the second connecting portion 231 is T₂, satisfying the conditions: 40% ≤ T₁ ≤ 99% and 0% ≤ T₂≤ 10%. Along the thickness direction X of the first wall, the thickness of the first connecting portion 241 is D₁, and the thickness of the second connecting portion 231 is D₂, satisfying the conditions: 0.5mm ≤D₁ ≤ 2.5mm and 0.5mm ≤ D₂ ≤ 2.5mm.

It should be noted that, without conflict, the embodiments and features described in the embodiments of the present disclosure can be combined with each other.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

## Claims

1. A battery cell, comprising
a housing, provided with a first wall;
an electrode assembly accommodated in the housing, wherein the electrode assembly comprises a main portion;
a first insulating member, wherein, along a thickness direction of the first wall, the first insulating member is provided on a side of the first wall facing the electrode assembly; and
a support frame, wherein, along the thickness direction of the first wall, the support frame is arranged between the main portion and the first insulating member, and the support frame is thermally fused to the first insulating member.

2. The battery cell according to claim 1, wherein the support frame is provided with a first connecting portion; the first insulating member is provided with a second connecting portion; the first connecting portion is thermally fused to the second connecting portion; and a light transmittance of the first connecting portion is T₁, and a light transmittance of the second connecting portion is T₂, satisfying a condition: T₁ > T₂.

3. The battery cell according to claim 2, wherein 40%≤T ₁≤99%.

4. The battery cell according to claim 3, wherein 60%≤T ₁≤99%.

5. The battery cell according to any one of claims 2 to 4, wherein 0%≤T₂≤10%.

6. The battery cell according to any one of claims 2 to 5, wherein along the thickness direction of the first wall, the first connecting portion and the second connecting portion are arranged in a stacked manner and thermally fused.

7. The battery cell according to claim 6, wherein along the thickness direction of the first wall, a thickness of the first connecting portion is D₁, satisfying a condition: 0.5mm≤D₁≤2.5mm.

8. The battery cell according to claim 6 or 7, wherein along the thickness direction of the first wall, a thickness of the second connecting portion is D₂, satisfying a condition: 0.5mm≤D₂≤2.5mm.

9. The battery cell according to any one of claims 6 to 8, wherein the support frame further comprises a main body portion, along a first direction, the first connecting portion protrudes from one end of the main body portion, and the first direction is perpendicular to the thickness direction of the first wall.

10. The battery cell according to claim 9, wherein along the first direction, both ends of the main body portion are provided with the first connecting portion in a protruding manner, and the first connecting portion is arranged to correspond one-to-one with the second connecting portion.

11. The battery cell according to any one of claims 6 to 10, wherein the first insulating member comprises
an insulating body, and along the thickness direction of the first wall, the insulating body is provided on a side of the first wall facing the electrode assembly; and
a protrusion arranged on a side of the insulating body facing the electrode assembly in a protruding manner, wherein the protrusion is provided with the second connecting portion.

12. The battery cell according to claim 11, wherein along the thickness direction of the first wall, the protrusion is provided with a first surface facing the electrode assembly, the first surface is provided with a first groove, and the first connecting portion abuts a bottom surface of the first groove; and
the insulating body is provided with a second surface abutting the first wall, the second surface is provided with a second groove, and a portion of the protrusion located between the bottom surface of the first groove and the bottom surface of the second groove forms the second connecting portion.

13. The battery cell according to any one of claims 1 to 12, wherein the first insulating member comprises
an insulating body, wherein, along the thickness direction of the first wall, the insulating body is provided on a side of the first wall facing the electrode assembly; and
two protrusions provided in a protruding manner on a side of the insulating body facing the electrode assembly, wherein, along the first direction, the two protrusions are arranged at intervals, a holding space is formed between the two protrusions, the holding space is configured to accommodate at least a portion of the support frame, and the first direction is perpendicular to the thickness direction of the first wall.

14. The battery cell according to claim 13, wherein along the thickness direction of the first wall, the protrusion is provided with a first surface facing the main portion, and the support frame does not extend beyond the first surface.

15. The battery cell according to claim 13 or 14, wherein the support frame comprises a main body portion and a first connecting portion; the main body portion is accommodated in the holding space; along the first direction, the first connecting portion protrudes from at least one end of the main body portion; and
along the thickness direction of the first wall, the protrusion is provided with a first surface facing the main portion; the first surface is provided with a first groove; along the first direction, the first groove penetrates through the protrusion and communicates with the holding space; the first connecting portion extends into the first groove; and the first connecting portion is thermally fused to the bottom surface of the first groove.

16. The battery cell according to claim 15, wherein the first connecting portion and a groove side surface of the first groove are arranged at intervals, and a distance between the first connecting portion and the groove side surface of the first groove is L, satisfying a condition: 0.8mm ≤ L ≤ 2mm.

17. The battery cell according to any one of claims 1 to 16, wherein the battery cell further comprises
an electrode terminal, arranged on the first wall; and
the electrode assembly further comprises a tab, wherein, along the thickness direction of the first wall, the tab protrudes from one end of the main portion facing the first wall, the tab is bent around the support frame, and the tab is connected to the electrode terminal.

18. The battery cell according to claim 17, wherein the battery cell further comprises a current collector member, wherein, along the thickness direction of the first wall, the current collector member is provided between the first insulating member and the support frame, and the current collector member connects the electrode terminal and the tab.

19. The battery cell according to any one of claims 1 to 18, wherein the housing comprises a shell, wherein an accommodating cavity with an opening is formed inside the shell, and the electrode assembly is accommodated within the accommodating cavity; and
an end cap sealed the opening,
wherein the end cap is the first wall.

20. The battery cell according to any one of claims 1 to 18, wherein the housing comprises a shell comprising a side wall and the first wall which are integrally molded, with the side wall arranged around the first wall; along the thickness direction of the first wall, an end of the side wall is connected to the first wall, and the other end encloses to form an opening; and the side wall and the first wall together define an accommodating cavity configured for accommodating the electrode assembly; and
an end cap sealed the opening.

21. A battery, comprising the battery cell according to any one of claims 1 to 20.

22. An electric device, comprising the battery according to claim 21.
